# EUROPÄISCHE PATENTSCHRIFT

(11) **EP 1 831 595 B1**
(45) Veröffentlichungstag und Bekanntmachung des Hinweises auf die Patenterteilung: **18.05.2011**
(21) Anmeldenummer: 05801385.5
(22) Anmeldetag: 25.10.2005
(51) Int. Cl.: F16K 31/70

(54) **BETÄTIGUNGSVORRICHTUNG FÜR VENTILE**
VALVE ACTUATING DEVICE
DISPOSITIF D'ACTIONNEMENT POUR SOUPAPES

(30) Priorität: 23.12.2004 DE 102004062241
(43) Veröffentlichungstag der Anmeldung: 12.09.2007
(73) Patentinhaber: BSH Bosch und Siemens Hausgeräte GmbH, 81739 München (DE)
(72) Erfinder: JERG, Helmut, 89537 Giengen (DE)
(86) Internationale Anmeldenummer: PCT/EP2005/055498
(87) Internationale Veröffentlichungsnummer: WO 2006/069835

(56) Entgegenhaltungen:
- EP-A- 1 241 351
- WO-A-03/072939
- DE-A1- 10 108 715
- DE-A1- 10 217 061
- PATENT ABSTRACTS OF JAPAN Bd. 010, Nr. 044 (M-455), 21. Februar 1986 (1986-02-21) & JP 60 196482 A (SANYO DENKI KK), 4. Oktober 1985 (1985-10-04)

## Beschreibung

Die Erfindung betrifft ein Ventil für ein wasserführende Haushaltsgerät mit einem in einem Ventilgehäuse gelagerten Ventilkörper, der über ein Formgedächtniselement betätigbar ist, das von einem unverformten Ruhezustand über einen verformten Spannungszustand wieder in den Ruhezustand überführbar ist und ein wasserführendes Haushaltsgerät mit einem derartigen Ventil.

In zahlreichen Anwendungen, insbesondere in wasserführenden Haushaltsgeräten wie zum Beispiel in Waschmaschinen oder Spülmaschinen, werden Ventile eingesetzt, die große Querschnitte mit Nennweiten von größer 10 mm schalten. Dafür bekannte Ventile arbeiten heute zum Beispiel mit Gleich- oder Wechselstrommagneten. Sie ermöglichen eine schnelle Betätigung des Ventils, stellen jedoch andererseits nur eine geringe Schaltkraft zur Betätigung des Ventilkörpers zur Verfügung. Insbesondere bei Wechselstrommagneten tritt zudem das Problem auf, dass es infolge der an Magneten anliegenden Netzspannung zu Schwingungen in der Spule kommt. Diese Schwingungen rufen ein unerwünschtes Geräusch hervor.

Daher sind als Alternative direkt betätigte Ventilanordnungen bekannt, bei denen zur Steuerung des Ventilkörpers Bauelemente verwendet werden, die aus so genannten Formgedächtnislegierungen hergestellt sind. Das Formgedächtnis (Memory-Effekt) derartiger Legierungen (Memory-Metall) beruht auf einer Gefügeumwandlung der Legierung bei Über- bzw. Unterschreiten einer Grenztemperatur. Infolge der Gefügeumwandlung ändern Bauelemente aus derartigen Legierungen ihre Abmessungen im Bereich der Grenztemperatur um bis zu 5%. Dadurch werden erhebliche Stellkräfte aktiviert. Die bei der Änderung des Kristallgefüges der Formgedächtnistegierung aktivierten Stellkräfte werden in eine Betätigungsbewegung des Ventils umgesetzt.

Im Allgemeinen werden zwei Arten von Formgedächtnislegierungen anhand der Art und Weise ihrer Rückverformung unterschieden. Zum einen existieren Formgedächtnislegierungen, die sich nach ihrer Verformung infolge des Überschreitens einer Grenztemperatur bei Abfallen der Temperatur unter den Grenzwert nicht aus eigener Kraft in ihre Ausgangsgestalt zurückverformen. Für einen erneuten Einsatz von Bauelementen aus derartigen Legierungen muss die Rückverformung durch eine von außen aufgebrachte Kraft, zum Beispiel durch eine mechanische Dehnung, wiederhergestellt werden. Da sich diese Formgedächtnislegierungen nur in eine Richtung temperaturabhängig verformen, werden sie dem so genannten Einwegetyp zugeordnet.

Formgedächtnislegierungen nach dem Zweiwegeeffekt verformen sich ebenfalls bei Überschreiten der Grenztemperatur. Bei Absinken der Temperatur unter den Grenzwert gewinnen sie allerdings ihre ursprüngliche Form wieder zurück. Ein weiterer Unterschied zwischen den Legierungen nach dem Einwege- bzw. Zweiwegeeffekt besteht darin, dass die Kraft, die ein Bauteil nach dem Einwegeeffekt beim Übergang über die Grenztemperatur aktiviert, größer ist als die von Bauelementen nach Zweiwegeeffekt. Die zur Rückstellung des Bauelements nach dem Einwegeeffekt aufgebrachte Rückstellkraft muss allerdings so bemessen sein, dass sie einerseits ausreicht, um eine Rückverformung der Formgedächtnislegierung bei Unterschreiten der Grenztemperatur zu erreichen. Andererseits darf sie aber nicht so stark sein, dass sie die Formänderung der Legierung beim Überschreiten der Grenztemperatur behindert.

Eine Ventilanordnung mit einem Formgedächtniselement zur Ansteuerung des Ventilkörpers ist aus der DE 199 63 499 A1 bekannt. Der dortige Ventilkörper ist in einer Grundstellung vorgespannt und über einen Aktuator in eine Steuerstellung verschiebbar. Der Aktuator ist als Formgedächtniselement aus einer Formgedächtnislegierung hergestellt. Ihm ist eine Steuereinrichtung zum Einstellen der Temperaturänderung zugeordnet. Eine derartige Ventilanordnung weist, sofern ein Formgedächtniselement nach dem Einwegeeffekt eingesetzt wird, unterschiedliche Beträge für die Betätigungskräfte des Ventils in Öffnungs- bzw. Schließrichtung auf. Denn in derjenigen Richtung, in der das Formgedächtniselement den Ventilkörper aufgrund einer Verformung bewegt, wird eine größere Kraft generiert als auf dem entgegengesetzten Weg, in dem eine schwächere Feder die Rückstellung des Formgedächtniselements bewirken muss. Zudem muss die schwächere Rückstellfeder noch die Gegenbewegung des Ventilkörpers und dabei gegebenenfalls einem Fluiddruck entgegenwirken. Werden dagegen Formgedächtniselemente nach dem Zweiwegeeffekt eingesetzt, müssen geringere Betätigungskräfte in Kauf genommen werden.

Die DE 102 17 061 A1 bezieht sich auf einen Durchflusseinsteller mit zwei oder mehreren Öffnungen für strömende Medien. Diese sind mittels eines beweglich gelagerten Schließelements verschließbar. Dazu sind zwei oder mehrere mit dem Schließelement bewegungsgekoppelte und separat erwärmbare Stellaktoren aus einer Formgedächtnis-Legierung vorgesehen.

Die EP 1 241 351 A1 beschäftigt sich lediglich ganz allgemein mit einem Formgedächtnisaktuator mit einer Nockenführung.

Es ist Aufgabe der Erfindung, ein wasserführendes Haushaltsgerät mit einer Ventilanordnung anzugeben, die große Querschnitte ohne Geräusch und präzise schaltet. Diese Aufgabe wird durch folgendes, erfindungsgemäßes wasserführende Haushaltsgerät gelöst:
Wasserführendes Haushaltsgerät, insbesondere Geschirrspülmaschine oder Waschmaschine, mit einem eingebauten Ventil, das eine Ventilkammer und je einen Anschlussstutzen für einen Zulauf und einen Ablauf sowie einen in einem Ventilgehäuse gelagerten Ventilkörper zu seinem Öffnen und Schließen umfasst, wobei zum Betätigen des Ventilkörpers in die Schließstellung und in die Offenstellung des Ventils ein Formgedächtniselement vorgesehen ist, das von einem unverformten Ruhezustand über einen verformten Spannungszustand wieder in den Ruhezustand überführbar ist, wobei eine Kraftumlenkvorrichtung vorgesehen ist, mit deren Hilfe das Formgedächtniselement den Ventilkörper insbesondere nach dem Einwegeprinzip ausschließlich entweder bei Überführung in seinen Spannungszustand oder bei der Überführung in seinen Ruhezustand in die Schließstellung und die Offenstellung des Ventils betätigt, und wobei die Kraftumlenkvorrichtung ein Schaltherz mit einer Kulissenführung umfasst oder in einem Hebelmechanismus besteht.

Diese Ventilanordnung des erfindungsgemäßen wasserführenden Haushaltsgeräts weist eine Kraftumlenkungsvorrichtung auf. Mit deren Hilfe betätigt das Formgedächtniselement beide Schaltzustände des Ventils entweder bei Überführung in seinen Spannungszustand oder bei der Überführung in den Ruhezustand. Die Erfindung wendet sich also von Konstruktionen ab, bei denen dem Verformungs- oder Ruhezustand des Formgedächtniselements jeweils ein Öffnungs- oder Schließzustand des Ventils genau zugeordnet ist oder umgekehrt. Sie verfolgt vielmehr das Prinzip, die große Kraftentfaltung eines Formgedächtniselements insbesondere nach dem Einwegeprinzip für beide Schaltvorgänge eines Ventils, also sowohl zu seiner Öffnung als auch zu seinem Schließen, zu nutzen. Damit ist erreicht, dass die große Formänderungskraft des Formgedächtniselements beide Ventilbewegungen bewirkt und diese daher gleichermaßen präzise gesteuert werden können.

Voraussetzung dafür ist, dass eine Kraftumlenkvorrichtung vorhanden ist, die dies ermöglicht. Daher kann eine erste vorteilhafte Ausgestaltung der Erfindung eine Kraftumlenkvorrichtung aufweisen, die eine Bewegung des Formgedächtniselements in einer Betätigungsrichtung direkt in eine Bewegung in einander entgegengesetzte Wirkungsrichtungen umsetzt. Unter der Betätigungsrichtung ist dabei diejenige Bewegungsrichtung zu verstehen, in der die Kraft aus der Formumwandlung des Formgedächtniselements oder die ihr entgegengesetzte Rückstellkraft wirkt, die zur Betätigung des Ventils genutzt wird. Die einander entgegengesetzten Wirkungsrichtungen dagegen sind diejenigen, in denen eine Kraft zum Öffnen und zum Schließen des Ventils wirkt. Die Kraftumlenkungsvorrichtung kann prinzipiell entweder die Verformungskraft des Formgedächtniselements infolge des Überschreitens der Grenztemperatur oder eine separat aufgebrachte Rückstellkraft im Falle eines Formgedächtniselements nach dem Einwegeeffekt oder die vom Formgedächtniselement selbst aktivierte Rückstellkraft infolge des Unterschreitens der Grenztemperatur gemäß dem Zweiwegeeffekt schalten. Bevorzugt wird jedoch die Verformungskraft eines Formgedächtniselements nach dem Einwegeeffekt eingesetzt, weil sie die betragsmäßig größte ist.

Eine Kraftumlenkvorrichtung kann auf ganz unterschiedliche Art und Weise gebildet werden. Nach einer vorteilhaften Ausgestaltung der Erfindung kann sie eine Kulissenführung aufweisen. Sie stellt damit einen einfachen Mechanismus dar, der leicht zu montieren und daher wenig fehleranfällig ist und nur einen geringen Platzbedarf beansprucht.

Nach einer dazu alternativen Ausgestaltungsform der Erfindung kann die Kraftumlenkvorrichtung in einem Hebelmechanismus bestehen. Er bietet den Vorteil, dass er genauer zu justieren ist.

Der Stand der Technik kennt eine Vielzahl von Formgedächtniselementen. Darunter befinden sich so genannte Memory-Metalle, die aus Legierungen, zum Beispiel auf NiTi-, Fe- oder Cu-Basis legiert sind. Daneben sind auch Kunststoffe mit Formgedächtniseigenschaften bekannt. In einer vorteilhaften Ausgestaltung der Erfindung kann das Formgedächtniselement von einem Memory-Metall gebildet sein, das durch Erwärmen verformbar ist. Den Memory-Metallen bzw. entsprechenden Legierungen wird der Vorzug gegeben, weil sie dauerhafter sind und damit seltener zu einem Ausfall des Ventils führen.

In aller Regel wird die Formänderung des Memory-Metalls durch Energiezufuhr in Form von Wärme herbeigeführt. Die Erwärmung kann bei einer weiteren vorteilhaften Ausgestaltung der Erfindung durch Bestromen des Memory-Metalls selbst erfolgen. Diese Erwärmung arbeitet nahezu verlustfrei und effektiv, weil sie keiner Energieumwandlungsschritte in einer separaten Heizeinrichtung bedarf.

Die Erwärmung eines stromdurchflossenen Metalls rührt daher, dass das Metall dem Strom einen Widerstand entgegensetzt. Nach einer weiteren besonders vorteilhaften Ausgestaltung der Erfindung kann zur Steuerung der Erwärmung ein PTC eingesetzt werden. Ein PTC ist ein Heizwiderstand, der einen positiven Temperaturkoeffizienten aufweist. Mit steigender Temperatur nimmt folglich sein Widerstand zu. Die Temperaturerwärmung erfolgt wiederum infolge eines Durchflusses von Strom. Der Strom passiert den PTC nur eine kurze Zeit ungehindert, bis dieser infolge Erwärmung dem Stromfluss einen bestimmten Widerstand entgegensetzt, gegebenenfalls bis zur vollkommenen Unterbrechung des Stromflusses. Durch entsprechende Auslegung des PTC lässt sich folglich gezielt ein definierter Stromimpuls erzeugen.

Diese besondere Charakteristik des PTC macht sich die Erfindung zunutze, um sie für eine besondere vorteilhafte Steuerung der Erwärmung des Formgedächtniselements zu verwenden. Denn zur Aktivierung eines Formgedächtniselements ist ein Betätigungsstrom bei einer relativ hohen Stromstärke erwünscht. Damit kann eine große und schnelle Formänderung erzielt werden. Liegt ein Strom dieser Stärke jedoch über einen längeren Zeitraum am Formgedächtniselement an, kann es beschädigt werden. Daher muss die Wirkungsdauer des Betätigungsstroms begrenzt werden. Es muss also ein Betätigungsimpuls erzeugt werden, den das Formgedächtniselement auch über viele Betätigungen hinweg beschädigungsfrei übersteht. Der Betätigungsimpuls kann zwischen einer Stromstärke von etwa 3 bis 6 A liegen und über eine Zeitdauer von 100 bis 500 ms wirken. Ein entsprechender vorgeschalteter PTC sorgt nun für eine derartige Begrenzung des Stromflusses bzw. für einen Betätigungsimpuls. Er erzeugt diesen Impuls, indem er in der vorher beschriebenen Weise einen Strom der erforderlichen Stärke für nur eine kurze Zeitdauer passieren lässt. Durch den Einsatz eines PTC erübrigt sich demzufolge eine aufwändige Steuerung zur Erzeugung eines definierten Stromimpulses.

Die Erfindung betrifft auch ein Ventil für ein wasserführendes Haushaltsgerät mit einer Ventilkammer und mit je einem Anschlussstutzen für einen Zulauf und einen Ablauf sowie mit einem in einem Ventilgehäuse gelagerten Ventilkörper zu seinem Öffnen und Schließen, wobei zum Betätigen des Ventilkörpers in die Schließstellung und in die Offenstellung des Ventils ein Formgedächtniselement vorgesehen ist, das von einem unverformten Ruhezustand über einen verformten Spannungszustand wieder in den Ruhezustand überführbar ist, wobei eine Kraftumlenkvorrichtung vorgesehen ist, mit deren Hilfe das Formgedächtniselement den Ventilkörper insbesondere nach dem Einwegeprinzip ausschließlich entweder bei Überführung in seinen Spannungszustand oder bei der Überführung in seinen Ruhezustand in die Schließstellung und die Offenstellung des Ventils betätigt, und wobei die Kraftumlenkvorrichtung ein Schaltherz mit einer Kulissenführung umfasst oder in einem Hebelmechanismus besteht.

Das Prinzip der Erfindung wird im Folgenden anhand von Zeichnungen beispielshalber noch näher erläutert. Es zeigen:
Figur 1 einen Schnitt durch ein Ventil;
Figur 2 eine Kraftumlenkvorrichtung des Ventils nach Figur 1.

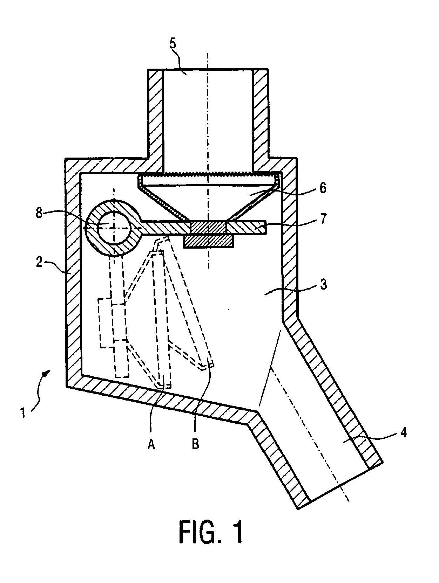

Ein Beispiel für ein erfingdungsgemäß schaltbares Ventil 1 zeigt Figur 1. Es umfasst ein Ventilgehäuse 2, das eine Ventilkammer 3 und je einen Anschlussstutzen für einen Zulauf 4 und einen Ablauf 5 umfasst. In der Ventilkammer 3 ist ein Ventilkörper 6 auf einem Arm 7 angeordnet, der drehbar auf einer Achse 8 gelagert ist. Der Ventilkörper 6 kann auf seinem Arm 7 von einer in Figur 1 dargestellten Verschlussstellung über eine erste gestrichelt dargestellte Betriebsstellung A in eine ebenfalls gestrichelt dargestellte Offenstellung B überführt werden. Die Betriebsstellung A stellt die Maximalauslenkung des Ventilkörpers 6 in Öffnungsrichtung dar und wird nur vorübergehend bei der Betätigung eingenommen. Die Offenstellung B stellt dagegen die Ruheposition des Ventilkörpers 6 im geöffneten Zustand des Ventils 1 dar.

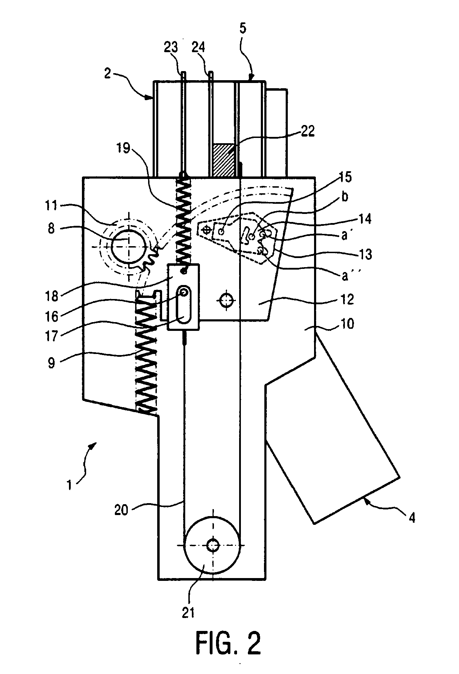

Figur 2 gibt eine Kraftumlenkvorrichtung zur Betätigung des Ventils 1 wieder. Demnach durchdringt die Achse 8 einen Gehäusedeckel 10 und weist oberhalb des Gehäusedeckels 10 ein Ritzel 11 auf. Das Ritzel 11 kämmt mit den Zähnen einer kreissegmentförmigen Scheibe 12, die auf dem Gehäusedeckel 10 drehbar gelagert ist. An der Scheibe 12 greift eine Schließfeder 9 an, die die Scheibe 12 in Uhrzeigerrichtung druckbelastet und sich am Gehäuse 2 abstützt. Zwischen der Scheibe 12 und dem Gehäusedeckel 10 ist ein Schaltherz 13 angeordnet, das an der Scheibe 12 und ihr gegenüber drehbar gelagert ist. Bei einer Drehung der Scheibe 12 wird folglich das Schaltherz 13 mitbewegt. Durch nicht dargestellte Federn wird es in der gezeigten Grundposition gehalten. Es weist eine Kulisse 14 auf, in die ein Stößel 15 eingreift, der am Gehäusedeckel 10 befestigt ist. Bei einer Bewegung der Scheibe 12 wird folglich der Stößel 15 relativ zum Schaltherz 13 innerhalb der Kulisse 14 bewegt.

Alternativ dazu kann auch das Schaltherz 13 gehäusefest mit der Scheibe 12 verbunden, zum Beispiel auf deren Rückseite angebracht sein. Dann ist der Stößel 15 beweglich zu lagern. Er kann auf dem Gehäusedeckel 10 in einem Schlitz geführt sein, so dass er bei einer Bewegung der Scheibe 12 quer dazu innerhalb der Kulisse 14 bewegt werden kann.

Mit der Scheibe 12 ist außerdem ein Stift 16 fest verbunden, der in ein Langloch 17 einer länglichen Verbindungslasche 18 eingreift. An der einen Schmalseite der Verbindungslasche 18 greift ein Ende einer Zugfeder 19 an, deren anderes Ende in einem Widerlager am Gehäuse 2 befestigt ist. An der gegenüberliegenden Schmalseite der Verbindungslasche 18 ist ein Draht 20 aus Memory-Metall als Formgedächtniselement befestigt. Er ist um eine ebenfalls auf dem Gehäusedeckel 10 drehbar gelagerte Umlenkrolle 21 geführt und schließt mit seinem anderen Ende an dem am Gehäuse 2 angeordneten Heizwiderstand 22 an. Der Heizwiderstand 22 liegt in einem Stromkreis zwischen einer ersten Kontaktfahne 23 auf der einen Seite und dem Draht 20, der Verbindungslasche 18, der Zugfeder 19 und einer zweiten Kontaktfahne 24 auf der anderen Seite. Im Betrieb sind die Bauteile 23, 20, 22, 24 also stromdurchflossen.

Das Ventil 1 befindet sich in der in Figur 2 dargestellten Position in derselben Verschlussstellung wie in Figur 1. Zur Betätigung des Ventils 1 wird nun ein Strom an den Kontaktfahnen 23, 24 angelegt. Der stromdurchflossene Heizwiderstand 22 bewirkt daraufhin einen gezielten Betätigungsimpuls zur Erwärmung des Drahtes 20. Infolge der kurzen starken Erwärmung verkürzt sich der Draht 20 und bewegt damit die Verbindungslasche 18 in eine Richtung auf die Umlenkrolle 21 hin. Dabei nimmt die Verbindungslasche 18 den Stift 16 auf der Scheibe 12 mit. Sie dreht die Scheibe 12 gegen den Uhrzeigersinn, so dass die Schließfeder 9 komprimiert wird.

Die Drehung der Scheibe 12 wird an das Ritzel 8 weitergegeben, so dass sich der Arm 7 samt Ventilkörper 6 vom Stutzen des Ablaufs 5 abhebt und gegen die Uhrzeigerrichtung in die Betätigungsposition A überführt wird (Figur 1). Durch die Drehbewegung der Scheibe 12 wandert der gegenüber dem Gehäusedeckel 10 feststehende Stößel 15 innerhalb der Kulisse 14 des Schaltherzens 13 in die Betätigungsposition a'.

Nach Ausbleiben einer weiteren Stromzufuhr und einem Abklingen der Erwärmung infolgedessen lässt die Zugkraft im Draht 20, die zu seiner Verkürzung geführt hat, nach. Jetzt wirkt die Zugfeder 19 in die Gegenrichtung und streckt den Draht 20 wieder auf seine ursprüngliche Länge. Dabei dreht sich die Scheibe 12 in Uhrzeigerrichtung und damit in Richtung auf ihre Ausgangsposition zurück. Während der Draht 20 jedoch aufgrund des Langloches 17 in der Verbindungslasche 18 seine Ausgangsposition wieder einnehmen kann, wird die Scheibe 12 daran durch den Stößel 15 gehindert, da dieser nun durch das Schaltherz 13 in die Zwischenposition b innerhalb der Kulisse 14 gezwungen wird. Dies verhindert ein vollständiges Zurückdrehen der Scheibe 12, so dass auch der Arm 7 nur einen Teil seines Rückweges nimmt und in einer Offenstellung B verharrt. Damit ist der Weg zwischen dem Zulauf 4 und dem Ablauf 5 innerhalb des Ventils geöffnet, ohne dass eine dauerhafte Krafteinwirkung zur Aufrechterhaltung der Öffnungsstellung B erforderlich wäre.

Durch einen erneuten Stromimpuls über die Kontaktfahnen 23, 24 erwärmt sich der Heizwiderstand 22 erneut, was wiederum zu einer Verkürzung des Drahtes 20 führt. Sie bewirkt eine Drehung der Scheibe 12 gegen den Uhrzeigersinn. Die erneute Drehung der Scheibe 12 überführt den Arm 7 und mit ihm den Ventilkörper 6 wiederum in die Betätigungsstellung A, der eine zweite Betätigungsstellung a" des Stößels 15 innerhalb der Kulisse 14 entspricht. Diese zweite Betätigungsstellung a" unterscheidet sich von der ersten Betätigungsstellung a' dadurch, dass beim nun folgenden Abkühlen des Drahtes, seiner Verlängerung infolge der Zugfeder 19 und der dadurch einsetzenden Drehung der Scheibe 12 im Uhrzeigersinn die vollständige Rückkehr der Scheibe 12 in die in Figur 2 dargestellte Ausgangsposition möglich ist. Damit nehmen der Arm 7 und mit ihm der Ventilkörper 6 wieder die in Figur 1 dargestellte Verschlussstellung des Ventils 1 ein.

Das erfindungsgemäße Ventil kann in einem wasserführenden Haushaltsgerät, insbesondere eine Geschirrspülmaschine oder Waschmaschine, zu jedem Zweck eingesetzt werden, beispielsweise zur Steuerung des Durchflusses in einem druckbeaufschlagten Rohr mit Reinigungsflüssigkeit oder zum Dosieren von insbesondere flüssigen Reiniger und Klarspüler.

Es wird abschließend noch einmal darauf hingewiesen, dass es sich bei dem vorhergehend detailliert beschriebenen Ventil um ein Ausführungsbeispiel handelt, das vom Fachmann in verschiedenster Weise modifiziert werden kann, ohne den Bereich der Erfindung zu verlassen. So kann auf einen Heizwiderstand verzichtet werden, wenn stattdessen ein Draht mit Forrnänderungseigenschaften verwendet wird, der gegebenenfalls mit einem vorgeschalteten Transformator unmittelbar stromdurchflossen und dadurch erwärmt wird.

Auch andere Kraftumlenkvorrichtungen sind denkbar, zum Beispiel solche, in denen eine translatorische Bewegung eines Formgedächtniselements in einer Richtung beispielsweise über eine Schrittmechanik in eine in zwei Richtungen orientierbare Betätigungsbewegung umgesetzt wird. Weiter kann anstelle einer Drehbewegung zur Betätigung des Ventils auch eine translatorische Betätigungsbewegung vorgesehen werden.

### Bezugszeichenliste

- 1: Ventil
- 2: Ventilgehäuse
- 3: Ventilkammer
- 4: Zulauf
- 5: Ablauf
- 6: Ventilkörper
- 7: Arm
- 8: Achse
- 9: Schließfeder
- 10: Gehäusedeckel
- 11: Ritzel
- 12: Scheibe
- 13: Schaltherz
- 14: Kulisse
- 15: Stößel
- 16: Stift
- 17: Langloch
- 18: Verbindungslasche
- 19: Zugfeder
- 20: Draht
- 21: Umlenkrolle
- 22: Heizwiderstand
- 23: Kontaktfahne
- 24: Kontaktfahne

## Patentansprüche

1. Wasserführendes Haushaltsgerät, insbesondere Geschirrspülmaschine oder Waschmaschine, mit einem eingebauten Ventil (1), das eine Ventilkammer (3) und je einen Anschlussstutzen für einen Zulauf (4) und einen Ablauf (5) sowie einen in einem Ventilgehäuse (2) gelagerten Ventilkörper (6) zu seinem Öffnen und Schließen umfasst, wobei zum Betätigen des Ventilkörpers (6) in die Schließstellung und in die Offenstellung des Ventils (1) ein Formgedächtniselement vorgesehen ist, das von einem unverformten Ruhezustand über einen verformten Spannungszustand wieder in den Ruhezustand überführbar ist, wobei eine Kraftumlenkvorrichtung vorgesehen ist, mit deren Hilfe das Formgedächtniselement (20) den Ventilkörper (6) insbesondere nach dem Einwegeprinzip ausschließlich entweder bei Überführung in seinen Spannungszustand oder bei der Überführung in seinen Ruhezustand in die Schließstellung und die Offenstellung des Ventils (1) betätigt, und wobei die Kraftumlenkvorrichtung ein Schaltherz (13) mit einer Kulissenführung (14) umfasst oder in einem Hebelmechanismus besteht.

2. Wasserführendes Haushaltsgerät nach Anspruch 1, **dadurch gekennzeichnet, dass** das Formgedächtniselement ein Memory-Metall (20) ist.

3. Wasserführendes Haushaltsgerät nach Anspruch 2, **dadurch gekennzeichnet, dass** das Memory-Metall (20) zur Erwärmung bestrombar ist.

4. Wasserführendes Haushaltsgerät nach Anspruch 2, **dadurch gekennzeichnet, dass** zur Steuerung der Erwärmung ein Heizwiderstand (22) eingesetzt ist.

5. Wasserführendes Haushaltsgerät nach einem der vorhergehenden Ansprüche, **dadurch gekennzeichnet, dass** die Kraftumlenkvorrichtung eine einen Gehäusedeckel (10) durchdringende Achse (8) zur drehbaren Lagerung eines Arms (7) für den Ventilkörper (6) und oberhalb des Gehäusedeckels (10) ein Ritzel (11) umfasst, das mit seinen Zähnen eine kreissegmentförmige Scheibe (12) kämmt, die auf dem Gehäusedeckel (10) drehbar gelagert ist.

6. Wasserführendes Haushaltsgerät nach Anspruch 6, **dadurch gekennzeichnet, dass** an der.kreissegmentförmigen Scheibe (12) eine Schließfeder (9) angreift, die die Scheibe (12) in Uhrzeigerrichtung druckbelastet und sich am Gehäuse (2) abstützt.

7. Wasserführendes Haushaltsgerät nach Anspruch 5 oder Anspruch 6, **dadurch gekennzeichnet, dass** zwischen der kreissegmentförmigen Scheibe (12) und dem Gehäusedeckel (10) das Schaltherz (13) angeordnet ist, das an der Scheibe (12) und ihr gegenüber drehbar gelagert ist.

8. Wasserführendes Haushaltsgerät nach einem der vorhergehenden Ansprüche, **dadurch gekennzeichnet, dass** in die Kulissenführung (14) des Schaltherzes (13) ein Stößel (15) eingreift, der am Gehäusedeckel (10) befestigt ist.

9. Wasserführendes Haushaltsgerät nach Anspruch 5 oder Anspruch 6, **dadurch gekennzeichnet, dass** das Schaltherz (13) gehäusefest mit der kreissegmentförmigen Scheibe (12) verbunden ist.

10. Wasserführendes Haushaltsgerät nach Anspruch 9, **dadurch gekennzeichnet, dass** ein Stößel (15) in einem Schlitz auf dem Gehäusedeckel (10) derart geführt ist, dass er bei einer Bewegung der kreissegmentförmigen Scheibe (12) quer dazu innerhalb der Kulissenführung (14) beweglich ist.

11. Wasserführendes Haushaltsgerät nach einem der Ansprüche 5 mit 10, **dadurch gekennzeichnet, dass** mit der kreissegmentförmigen Scheibe (12) ein Stift (16) fest verbunden ist, der in ein Langloch (17) einer länglichen Verbindungslasche (18) eingreift.

12. Wasserführendes Haushaltsgerät nach Anspruch 11, dass an der einen Schmalseite der Verbindungslasche (18) ein Ende einer Zugfeder (19) angreift, deren anderes Ende in einem Widerlager am Gehäuse (2) befestigt ist.

13. Wasserführendes Haushaltsgerät nach Anspruch 12, **dadurch gekennzeichnet, dass** an der gegenüberliegenden Schmalseite der Verbindungslasche (18) ein Draht (20) aus Memory-Metall als Formgedächtniselement befestigt ist.

14. Wasserführendes Haushaltsgerät nach Anspruch 13, **dadurch gekennzeichnet, dass** der Draht (20) um eine auf dem Gehäusedeckel (10) drehbar gelagerte Umlenkrolle (21) geführt ist und mit seinem anderen Ende an einem am Ventilgehäuse (2) angeordneten Heizwiderstand (22) anschließt.

15. Ventil (1) für ein wasserführendes Haushaltsgerät, insbesondere nach mindestens einem der vorhergehenden Ansprüche, mit einer Ventilkammer (3) und je einem Anschlussstutzen für einen Zulauf (4) und einen Ablauf (5) sowie mit einem in einem Ventilgehäuse (2) gelagerten Ventilkörper (6) zu seinem Öffnen und Schließen, wobei zum Betätigen des Ventilkörpers (6) in die Schließstellung und in die Offenstellung des Ventils (1) ein Formgedächtniselement vorgesehen ist, das von einem unverformten Ruhezustand über einen verformten Spannungszustand wieder in den Ruhezustand überführbar ist, wobei eine Kraftumlenkvorrichtung vorgesehen ist, mit deren Hilfe das Formgedächtniselement (20) den Ventilkörper (6) insbesondere nach dem Einwegeprinzip ausschließlich entweder bei Überführung in seinen Spannungszustand oder bei der Überführung in seinen Ruhezustand in die Schließstellung und die Offenstellung des Ventils (1) betätigt, und wobei die Kraftumlenkvorrichtung ein Schaltherz (13) mit einer Kulissenführung (14) umfasst oder in einem Hebelmechanismus besteht.

## Claims

1. Water-conducting domestic appliance, particularly dishwasher or washing machine, with an incorporated valve (1), which comprises a valve chamber (3) and a respective connecting stub pipe for each of a feed (4) and a drain (5) as well as a valve body (6), which is mounted in a valve housing (2), for opening and closing thereof, wherein for actuating of the valve body (6) into the closed setting and into the open setting of the valve (1) a shape memory element is provided which is transferrable from an undeformed rest state through a deformed stressed state back into the rest state, wherein a force deflecting device is provided with the help of which the shape memory element (20) actuates the valve body (6) particularly according to the single-way principle exclusively either on transfer to its stressed state or on transfer to its rest state into the closed setting and the open setting of the valve (1) and wherein the force deflecting device comprises a switching heart (13) with a gate guide (14) or consists of a lever mechanism.

2. Water-conducting domestic appliance according to claim 1, **characterised in that** the shape memory element is a memory metal (20).

3. Water-conducting domestic appliance according to claim 2, **characterised in that** the memory metal (20) can conduct current for the purpose of heating.

4. Water-conducting domestic appliance according to claim 2, **characterised in that** a heating resistance (22) is used for controlling the heating.

5. Water-conducting domestic appliance according to any one of the preceding claims, **characterised in that** the force deflecting device comprises an axle (8), which penetrates a housing cover (10), for rotatable mounting of an arm (7) for the valve body (6) and, above the housing cover (10), a pinion (11) which meshes by its teeth with a circularly segmental disc (12) rotatably mounted on the housing cover (10).

6. Water-conducting domestic appliance according to claim 5, **characterised in that** a closing spring (9) pressurably loading the disc (12) in clockwise direction and supported on the housing (2) engages the circularly segmental disc (12).

7. Water-conducting domestic appliance according to claim 5 or claim 6, **characterised in that** the switching heart (13), which is mounted on the disc (12) and is rotatable relative thereto, is arranged between the circularly segmental disc (12) and the housing cover (10).

8. Water-conducting domestic appliance according to any one of the preceding claims, **characterised in that** a plunger (15) fastened to the housing cover (10) engages in the gate guide (14) of the switching heart (13).

9. Water-conducting domestic appliance according to claim 5 or claim 6, **characterised in that** the switching heart (13) is connected with the circularly segmental disc (12) to be fixed relative to the housing.

10. Water-conducting domestic appliance according to claim 9, **characterised in that** a plunger (15) is so guided in a slot on the housing cover (10) that on movement of the circularly segmental disc (12) it is movable transversely thereto within the gate guide (14).

11. Water-conducting domestic appliance according to one of claims 5 and 10, **characterised in that** a pin (16) engaging in a slot (17) of an elongate connecting strap (18) is fixedly connected with the circularly segmental disc (12).

12. Water-conducting domestic appliance according to claim 11, **characterised in that** one end of a tension spring (19) engages at a narrow side of the connecting strap (18), the other end of the spring being fastened in a counter-bearing at the housing (2).

13. Water-conducting domestic appliance according to claim 12, **characterised in that** a wire (20) of memory metal as shape-memory element is fastened to the opposite narrow side of the connecting strap (18).

14. Water-conducting domestic appliance according to claim 13, **characterised in that** the wire (20) is guided around a deflecting roller (21) rotatably mounted on the housing cover (10) and is connected by its other end with a heating resistance (22) arranged at the valve housing (2).

15. Valve (1) for a water-conducting domestic appliance, particularly according to at least one of the preceding claims, with a valve chamber (3) and a respective connecting stub pipe for each of a feed (4) and a drain (5) as well as a valve body (6), which is mounted in a valve housing (2), for opening and closing thereof, wherein for actuation of the valve body (6) into the closed setting and into the open setting of the valve (1) a shape memory element is provided which is transferrable from an undeformed rest state through a deformed stressed state back into the rest state, wherein a force deflecting device is provided with the help of which the shape memory element (20) actuates the valve body (6) particularly according to the single-way principle exclusively either on transfer to its stressed state or on transfer to its rest state into the closed setting and the open setting of the valve (1) and wherein the force deflecting device comprises a switching heart (13) with a gate guide (14) or consists of a lever mechanism.

## Revendications

1. Appareil ménager véhiculant de l'eau, en particulier lave-vaisselle ou lave-linge, comprenant une soupape (1) intégrée, qui comprend une chambre de soupape (3) et à chaque fois une tubulure de raccordement pour une arrivée (4) et un écoulement (5) ainsi qu'un corps de soupape (6) monté dans un boîtier de soupape (2) pour son ouverture et sa fermeture, un élément à mémoire de forme étant prévu pour l'actionnement du corps de soupape (6) dans la position de fermeture et dans la position d'ouverture de la soupape (1), lequel élément peut être transféré d'un état de repos non déformé au moyen d'un état de tension déformé à nouveau dans l'état de repos, un dispositif d'inversion de force étant prévu, à l'aide duquel l'élément à mémoire de forme (20) actionne le corps de soupape (6) en particulier selon le principe unidirectionnel exclusivement soit en cas de transfert dans son état de tension soit lors du transfert dans son état de repos dans la position de fermeture et la position d'ouverture de la soupape (1), et le dispositif d'inversion de force comprenant un coeur de commutation (13) avec un guide de coulisse (14) ou consistant dans un mécanisme à levier.

2. Appareil ménager véhiculant de l'eau selon la revendication 1, **caractérisé en ce que** l'élément à mémoire de forme est un métal à mémoire (20).

3. Appareil ménager véhiculant de l'eau selon la revendication 2, **caractérisé en ce que** le métal à mémoire (20) peut être alimenté en courant pour le réchauffement.

4. Appareil ménager véhiculant de l'eau selon la revendication 2, **caractérisé en ce qu'**une résistance de chauffage (22) est utilisée pour la commande du réchauffement.

5. Appareil ménager véhiculant de l'eau selon l'une quelconque des revendications précédentes, **caractérisé en ce que** le dispositif d'inversion de force comporte un axe (8) traversant un couvercle de boîtier (10) pour le logement rotatif d'un bras (7) pour le corps de soupape (6) et au-dessus du couvercle de boîtier (10) un pignon (11), qui s'imbrique avec ses dents sur un disque (12) en forme de segment circulaire qui est monté en rotation sur le couvercle de boîtier (10).

6. Appareil ménager véhiculant de l'eau selon la revendication 6, **caractérisé en ce qu'**un ressort de fermeture (9), qui charge en pression le disque (12) dans le sens des aiguilles d'une montre et s'appuie sur le boîtier (2), s'applique sur le disque (12) en forme de segment circulaire.

7. Appareil ménager véhiculant de l'eau selon la revendication 5 ou la revendication 6, **caractérisé en ce que** le coeur de commutation (13), qui est monté en rotation sur le disque (12) et en face de celui-ci, est disposé entre le disque (12) en forme de segment circulaire et le couvercle de boîtier (10).

8. Appareil ménager véhiculant de l'eau selon l'une quelconque des revendications précédentes, **caractérisé en ce qu'**un coulisseau (15), qui est fixé sur le couvercle de boîtier (10), s'engage dans le guide de coulisse (14) du coeur de commutation (13).

9. Appareil ménager véhiculant de l'eau selon la revendication 5 ou la revendication 6, **caractérisé en ce que** le coeur de commutation (13) est relié de façon solidaire du boîtier au disque (12) en forme de segment circulaire.

10. Appareil ménager véhiculant de l'eau selon la revendication 9, **caractérisé en ce qu'**un coulisseau (15) est guidé dans une fente sur le couvercle de boîtier (10) de telle sorte que, lors d'un déplacement du disque (12) en forme de segment circulaire, il est mobile transversalement à ce disque à l'intérieur du guide de coulisse (14).

11. Appareil ménager véhiculant de l'eau selon l'une quelconque des revendications 5 à 10, **caractérisé en ce qu'**une goupille (16), qui s'engage dans un trou oblong (17) d'une patte de liaison (18) allongée, est reliée fixement au disque (12) en forme de segment circulaire.

12. Appareil ménager véhiculant de l'eau selon la revendication 11, **caractérisé en ce qu'**une extrémité d'un ressort de traction (19), dont l'autre extrémité est fixée dans un palier de butée sur le boîtier (2), s'applique sur l'un des côtés étroits de la patte de liaison (18).

13. Appareil ménager véhiculant de l'eau selon la revendication 12, **caractérisé en ce qu'**un fil (20) à base de métal à mémoire en tant qu'élément à mémoire de forme est fixé sur le côté étroit opposé de la patte de liaison (18).

14. Appareil ménager véhiculant de l'eau selon la revendication 13, **caractérisé en ce que** le fil (20) est guidé autour d'un galet inverseur (21) monté en rotation sur le couvercle de boîtier (10) et se raccorde par son autre extrémité à une résistance de chauffage (22) disposée sur le boîtier de soupape (2).

15. Soupape (1) pour un appareil ménager véhiculant de l'eau, en particulier selon au moins l'une quelconque des revendications précédentes, comprenant une chambre de soupape (3) et à chaque fois une tubulure de raccordement pour respectivement une arrivée (4) et une sortie (5) et un corps de soupape (6) monté dans un boîtier de soupape (2) pour son ouverture et sa fermeture, un élément à mémoire de forme étant prévu pour l'actionnement du corps de soupape (6) dans la position de fermeture et dans la position d'ouverture de la soupape (1), lequel élément peut être transféré d'un état de repos non déformé, au moyen d'un état de tension déformé, à nouveau dans l'état de repos, un dispositif d'inversion de force étant prévu, à l'aide duquel l'élément à mémoire de forme (20) actionne le corps de soupape (6), en particulier selon le principe unidirectionnel, exclusivement soit en cas de transfert dans son état de tension soit lors du transfert dans son état de repos dans la position de fermeture et dans la position d'ouverture de la soupape (1), et le dispositif d'inversion de force comprenant un coeur de commutation (13) avec un guide de coulisse (14) ou consistant dans un mécanisme à levier.
